# EUROPÄISCHE PATENTSCHRIFT

(11) **EP 4 228 879 B1**
(45) Veröffentlichungstag und Bekanntmachung des Hinweises auf die Patenterteilung: **12.03.2025**
(21) Anmeldenummer: 21790453.1
(22) Anmeldetag: 12.10.2021
(51) Int. Cl.: B29D 30/00, B29D 30/06

(54) **VERFAHREN ZUM MARKIEREN EINES FAHRZEUGREIFENS UND MARKIERSTATION**
METHOD FOR MARKING A VEHICLE TYRE, AND MARKING STATION
MÉTHODE DE MARQUAGE D'UN PNEUMATIQUE DE VÉHICULE ET STATION DE MARQUAGE

(30) Priorität: 16.10.2020 DE 102020213073
(43) Veröffentlichungstag der Anmeldung: 23.08.2023
(73) Patentinhaber: ZF Friedrichshafen AG, 88046 Friedrichshafen (DE)
(72) Erfinder: DOLLINGER, Thomas, 94036 Passau (DE); GRIEBL, Andreas, 94542 Haarbach (DE); STEMPLINGER, Florian, 94110 Wegscheid (DE); MAIER, Johannes, 94550 Künzing (DE)
(86) Internationale Anmeldenummer: PCT/EP2021/078104
(87) Internationale Veröffentlichungsnummer: WO 2022/078981

(56) Entgegenhaltungen:
- EP-A1- 3 269 569
- DE-A1- 102015 222 865

## Beschreibung

Die Erfindung betrifft ein Verfahren zum Markieren eines Fahrzeugreifens gemäß dem Oberbegriff von Anspruch 1 sowie eine Markierstation zum Markieren eines Fahrzeugreifens gemäß dem Oberbegriff von Anspruch 8.

Im Stand der Technik sind Reifenprüfstände bekannt, mittels derer Fahrzeugreifen einer Vielzahl von unterschiedlichen Prüfverfahren unterworfen werden können. Hierbei werden insbesondere Unwuchten, die Gleichförmigkeit, der Konuswert und die Geometrie des Fahrzeugreifens gemessen. Die ermittelten Kennwerte werden dann als Markierungen, z.B. als Farbpunkte, am Reifen angebracht und kennzeichnen die Fahrzeugreifen nach Qualitätsstufen. Dabei können die Farbpunkte je nach Anforderung an allen von außen sichtbaren Stellen des Fahrzeugreifens angebracht werden, ausgenommen die Reifenlauffläche.

Durch die WO 2015/086187 A1 wurde ein Verfahren zum automatischen Markieren eines Reifens bekannt, wobei der Reifen bereits eine Reifenprüfmaschine verlassen hat. Der zu markierende Reifen wird der Markierstation, welche der Messmaschine direkt nachgeordnet ist, auf direktem Wege über Förderbänder zugeführt.

Aus der US 2013/233067 A1 ist ein Reifenprüfstand mit einer Markierstation zum automatisierten Wechseln von Prüffelgen bekannt. Die Prüffelgen sind dabei aus zwei Axialhälften bestehend ausgebildet. Jede Prüffelge ist für eine bestimmte Reifengröße geeignet, so dass zur Prüfung von unterschiedlichen Reifengrößen ein Felgenwechsel erforderlich werden kann. Der Reifenprüfstand der US 2013/233067 A1 kann weiterhin auch eine nicht näher beschriebene Markierstation und eine ebenfalls eine nicht näher beschriebene Sortierstation umfassen.

Die WO 2011/143175 A2 offenbart ein System zur Montage von Fahrzeugrädern. Ein Roboterarm des Systems entnimmt einem Felgenlager eine Felge, ordnet ein Ventil in der Felge und die Felge schließlich in einem Reifen an.

Das solcherart montierte Fahrzeugrad wird dann vom Roboterarm an eine Reifenfüllstation weitergereicht, wo das Fahrzeugrad mit Druckluft befüllt wird. Anschließend wird das Fahrzeugrad einem Wuchttest unterworfen. Je nach Wuchtverhalten wird das Fahrzeugrad entsprechend markiert. Weiterhin wird ein Verfahren offenbart, demgemäß das Fahrzeugrad vom Roboterarm abhängig von einem Ergebnis des Wuchttests an unterschiedlichen Stationen zur weiteren Bearbeitung abgelegt wird.

Aus der DE 10 2015 222 865 A1 ist ein Verfahren zum Markieren und Sortieren von Reifen und zum Wechseln von Prüffelgen für die Reifen durch einen an sich bekannten Roboter bekannt, bei welchem der Roboter die geprüften Reifen aufnimmt und einer Markiereinrichtung zuführt, so dass durch die Markiereinrichtung eine die Qualität des Reifens beschreibende Markierung auf dem Reifen angebracht werden kann.

Die EP3269569 A1 beschreibt ein Verfahren sowie eine Vorrichtung zur Wartung von Fahrzeugrädern. Das Verfahren sieht vor, dass ein Fahrzeugrad auf einem Träger der Vorrichtung montiert wird, wobei das Rad eine Felge und einen Reifen umfasst. Darüber hinaus wird ein digitaler Code zur eindeutigen Identifizierung des Reifens erstellt. Schließlich wird über ein Markierungssystem, vorzugsweise optischer Art, auf der Oberfläche einer Seitenwand des Reifens des Rades mindestens eine Markierung erzeugt, die dem zuvor erstellten digitalen Code entspricht.

Ein der Erfindung zu Grunde liegendes Problem besteht darin, den in der Reifenproduktion sowie in der Fahrzeugherstellindustrie bestehenden Anforderungen an Markierpunktformen, -farben und -anzahl der zu markierenden Fahrzeugreifen mit möglichst geringem Vorrichtungsaufwand und geringen Durchlaufzeiten gerecht zu werden.

Diese Aufgabe wird erfindungsgemäß durch das Verfahren zum Markieren eines Fahrzeugreifens gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zum Markieren eines Fahrzeugreifens, wobei eine Zuführung des Fahrzeugreifens zu einer Markierstation erfolgt, wobei in der Markierstation ein Ausrichten und ein Zentrieren des Fahrzeugreifens erfolgen, wobei in der Markierstation das Markieren nach Maßgabe von Eigenschaften des Fahrzeugreifens erfolgt und wobei das Markieren mittels einer Markiervorrichtung aus einer Vielzahl von unterschiedlichen Markiervorrichtungen erfolgt. Das erfindungsgemäße Verfahren zeichnet sich dadurch aus, dass die Markiervorrichtung zum Markieren des Fahrzeugreifens mittels eines Roboterarms am Fahrzeugreifen positioniert wird.

Es ist also ein Verfahren vorgesehen, welches das Markieren eines Fahrzeugreifens nach Maßgabe von Eigenschaften des Fahrzeugreifens ermöglicht. Die Eigenschaften des Fahrzeugreifens beschreiben dabei vorzugsweise eine von mehreren möglichen Qualitätsstufen des Fahrzeugreifens, beispielsweise "sehr gut", "gut" und "durchschnittlich". Weitere bzw. andere Qualitätsstufen sind ebenfalls denkbar. Die Qualitätsstufen wiederum stehen bevorzugt für eine Unwucht, die der jeweilige Fahrzeugreifen in seinem Laufverhalten aufweist. Je geringer die Unwucht ist, je besser also das Laufverhalten des Fahrzeugreifens ist, desto höher ist vorteilhaft auch die Qualitätsstufe.

Alternativ bevorzugt können die Eigenschaften des Fahrzeugreifens aber auch ein Geräuschverhalten des Fahrzeugreifens, eine Bodenhaftung des Fahrzeugreifens, eine zulässige Höchstgeschwindigkeit des Fahrzeugreifens oder andere Eigenschaften des Fahrzeugreifens beschreiben, welche zusätzlich oder alternativ zum Laufverhalten des Fahrzeugreifens als Markierung auf dem Fahrzeugreifen angebracht werden können.

Die Markierung kann beispielsweise eine Farbmarkierung oder eine Prägemarkierung sein, wobei bei der Ausführung als Farbmarkierung unterschiedliche Qualitätsstufen vorzugsweise durch unterschiedliche Farben dargestellt werden. Bei der Ausführung als Prägemarkierung werden unterschiedliche Qualitätsstufen vorzugsweise durch unterschiedliche Prägesymbole dargestellt. Auch eine Kombination von Farbmarkierungen und Prägemarkierungen ist möglich und bevorzugt. Ebenso ist es möglich und bevorzugt, ein bestimmtes Markiermaterial zur Kennzeichnung einer bestimmten Qualitätsstufe vorzusehen.

Bei dem Fahrzeugreifen handelt es sich bevorzugt um einen sog. PCR (Passanger Car Radial Tire) -Reifen oder um einen sog. TBR (Truck and Bus Radial Tire) - Reifen.

Der Fahrzeugreifen wird der Markierstation vorteilhaft unmittelbar nach einem Prüfen der Eigenschaften des Fahrzeugreifens zugeführt, beispielsweise über ein Förderband zugeführt. Das Prüfen des Fahrzeugreifens erfolgt also insbesondere zeitlich vor dem erfindungsgemäßen Verfahren zum Markieren des Fahrzeugreifens in einer hierfür ausgebildeten Prüfstation.

Nach dem Zuführen des Fahrzeugreifens zur Markierstation, beispielsweise über ein Förderband, wird der Fahrzeugreifen von der Markierstation zunächst ausgerichtet und zentriert.

Unter dem Begriff "Zentrieren" wird dabei verstanden, dass die Rotationsachse des Fahrzeugreifens in eine Sollposition gebracht wird und somit auch der Fahrzeugreifen an der Sollposition ist. Der Fahrzeugreifen liegt dann insbesondere mittig auf einem Drehteller. Bei einem bekannten Radialdurchmesser des Fahrzeugreifens kann nun die Markierung an der vorgesehenen Radialposition angebracht werden. Das Zentrieren des Fahrzeugreifens erfolgt bevorzugt automatisiert über einen Zentrierarm, der den Reifen auf dem Drehteller verschieben kann.

Unter dem Begriff "Ausrichten" wird dabei verstanden, dass der Fahrzeugreifen in eine vorgesehene Winkelposition hinsichtlich seiner Rotationsachse gebracht wird. Somit kann die Markierung an der vorgesehenen Winkelposition angebracht werden. Das Ausrichten des Fahrzeugreifens erfolgt bevorzugt automatisiert über den Drehteller.

Das eigentliche Markieren des Fahrzeugreifens erfolgt dann mittels einer bestimmten Markiervorrichtung aus der Vielzahl von unterschiedlichen Markiervorrichtungen, wobei insbesondere jede Markiervorrichtung eine unterschiedliche Markierung erzeugt. Somit kann durch Auswahl einer bestimmten Markiervorrichtung festgelegt werden, welche Markierung auf dem Fahrzeugreifen angebracht werden soll.

Vorteilhaft kann es auch vorgesehen sein, dass jede Markiervorrichtung mehr als nur eine Markierung erzeugen kann, beispielsweise kann es möglich sein, dass eine Markiervorrichtung zwei, drei oder mehr unterschiedliche Markierungen erzeugen kann. Die zwei, drei oder mehr unterschiedliche Markierungen einer Markiervorrichtung können bevorzugt unabhängig voneinander und nach Maßgabe von Informationen aus dem Prüfvorgang angebracht werden.

Erfindungsgemäß ist es nun vorgesehen, dass die Markiervorrichtung zum Markieren des Fahrzeugreifens mittels eines Roboterarms am Fahrzeugreifen positioniert wird. Das bedeutet also, dass - im Gegensatz zum Stand der Technik - nicht der Fahrzeugreifen aufgenommen wird und der Markiervorrichtung zugeführt wird, sondern dass umgekehrt die Markiervorrichtung aufgenommenen wird und zum Fahrzeugreifen geführt wird. Dadurch kann einerseits vorteilhaft der benötigte Vorrichtungsaufwand reduziert werden, da die jeweils nicht vom Roboterarm aufgenommen und zum Markieren benötigten Markiervorrichtungen vom Roboterarm beiseite gelegt werden können und nicht für den Fahrzeugreifen zugänglich im Bereich der Markierstation bereitgehalten werden müssen. Die erfindungsgemäße Markierstation ist dadurch wesentlich kompakter und auch kostengünstiger als bekannte Markierstationen. Dies ermöglicht zudem auch das Bereitstellen einer vergleichsweise größeren Anzahl von Markiergeräten und damit entsprechend auch eine größere Anzahl von möglichen unterschiedlichen Markierungen, was wiederum die Einsatzmöglichkeiten einer derartigen Markierstation gegenüber bekannten Markierstationen erweitert, insbesondere ohne die Notwendigkeit von Umrüstungen und damit verbundenen Umrüstzeiten der Markierstation.

Zudem hat sich gezeigt, dass die Durchlaufzeiten der erfindungsgemäßen Markierstation gegenüber den Durchlaufzeiten der bekannten Markierstationen reduziert ist, d.h. also, dass das erfindungsgemäße Verfahren zum Markieren eines Fahrzeugreifens gegenüber den bekannten Verfahren eine Zeitersparnis mit sich bringt.

Ferner bietet die Verwendung des Roboterarms den Vorteil, dass auch andere, den Fahrzeugreifen nicht direkt betreffende Arbeitsschritte, beispielsweise das Wechseln der Prüffelgen, vom Roboterarm durchgeführt werden können. Das Wechseln der Prüffelgen, welche jeweils aus einer oberen und einer unteren Prüffelgenhälfte bestehen, erfolgt unabhängig von einem Markier- oder Prüfvorgang, d. h. immer dann, wenn ein Fahrzeugreifen mit einer anderen Größe in der Prüfstation geprüft werden soll. In diesem Falle tauscht der Roboterarm die aufgespannten Prüffelgenhälften gegen andere Prüffelgenhälften mit anderem Durchmesser aus.

Unter einem Roboterarm wird im Sinne der Erfindung ein sog. NC-Achsen-System verstanden, welches entweder als handelsüblicher und im Stand der Technik bekannter Roboter oder als frei konfigurierbares Linearachsensystem ausgebildet sein kann. Der Roboterarm ist vorteilhaft drehbar um eine vertikale Drehachse ausgebildet und umfasst mehrere Gelenke, die zumindest eine Drehbewegung von Armelementen jeweils um eine horizontale Drehachse ermöglichen, insbesondere aber auch um eine vertikale Drehachse. Zudem umfasst der Roboterarm vorteilhaft ein Werkzeugwechselsystem, welches beispielsweise als Greifer, insbesondere als Drei-Finger-Greifer ausgebildet sein kann, mittels dessen der Roboterarm eine jeweils benötigte Markiervorrichtung aufnehmen, betätigen und wieder ablegen kann.

Der Roboterarm weist vorzugsweise sechs Bewegungsachsen auf. Ein beispielhaft bevorzugter Robotertyp ist am Markt unter der Bezeichnung *KR QUANTEC Pro* vom Hersteller *KUKA* erhältlich.

Gemäß der beanspruchten Erfindung ist es vorgesehen, dass die Vielzahl von unterschiedlichen Markiervorrichtungen in einem Markiervorrichtungsmagazin bevorratet wird und dass der Roboterarm eine spezifische Markiervorrichtung aus der Vielzahl von unterschiedlichen Markiervorrichtung auswählt und aufnimmt. Das Markiervorrichtungsmagazin kann dabei z.B. wie ein Regal ausgebildet sein, welches die Vielzahl von unterschiedlichen Markiervorrichtung nebeneinander und übereinander an jeweils dafür vorgesehenen Positionen bevorratet. Der Roboterarm kennt dabei die individuelle Position jeder einzelnen Markiervorrichtung und kann diese somit zielgerichtet aus dem Markiervorrichtungsmagazin entnehmen und auch wieder zurücklegen. Das Markiervorrichtungsmagazin ermöglicht eine raumsparende Bevorratung in Reichweite des Roboterarms bei gleichzeitiger Gewährleistung von individuellen Positionen im Markiervorrichtungsmagazin für jede einzelne Markiervorrichtung.

Bevorzugt können auch mehrere Markiervorrichtungsmagazine vorgesehen sein, welche entweder allesamt in Reichweite des Roboterarms angeordnet sind oder automatisiert verfahrbar sind, beispielsweise über ein Schienensystem, so dass zumindest immer ein Markiervorrichtungsmagazin mit einer jeweils benötigten Markiervorrichtung in der Reichweite des Roboterarms ist.

Gemäß einer weiteren bevorzugten Ausführungsform der Erfindung ist es vorgesehen, dass der Roboterarm bei einem Wechsel der Markiervorrichtung eine nicht mehr benötigte Markiervorrichtung im Markiervorrichtungsmagazin an einer der nicht mehr benötigten Markiervorrichtung zugeordneten Position ablegt. Somit kann diese Markiervorrichtung später von der ihr individuell zugewiesenen und dem Roboterarm bekannten Position wieder aufgenommen werden.

Gemäß einer weiteren bevorzugten Ausführungsform der Erfindung ist es vorgesehen, dass die Markiervorrichtung während ihrer Ablagedauer mit elektrischer und/oder thermischer Energie für eine Vielzahl von Markiervorgängen versorgt wird. Je nach Ausbildung der Markiervorrichtung zur Anbringung von Farbmarkierungen, Prägemarkierungen bzw. Materialmarkierungen, kann es notwendig sein, die Markiervorrichtung mit elektrischer bzw. thermischer Energie zu versorgen. Die Versorgung mit thermischer Energie kann beispielsweise derart erfolgen, dass ein Prägestempel einer zum Anbringen von Prägemarkierungen vorgesehenen Markiervorrichtung während der Ablagedauer im Markiervorrichtungsmagazin über eine externe Wärmequelle beheizt wird. Weiterhin kann eine derartige Markiervorrichtung auch eine elektrische Energiespeichereinheit umfassen, mittels welcher der Prägestempel nach der Entnahme aus dem Markiervorrichtungsmagazin weiterhin geheizt wird. Jedoch ist es auch denkbar, dass zur Anbringung von Farbmarkierungen bzw. Materialmarkierungen vorgesehene Markiervorrichtung elektrische Energie benötigen, welche im Betrieb der jeweiligen Markiervorrichtung über die elektrische Energiespeichereinheit bereitgestellt wird.

Die elektrische Energiespeichereinheit ist bevorzugt als wiederaufladbarer Lithium-Ionen-Speicher ausgebildet.

Das Zuführen von elektrischer Energie im Markiervorrichtungsmagazin kann beispielsweise drahtlos mittels Induktion erfolgen oder über entsprechende elektrische Kontakte des Markiervorrichtungsmagazins und der jeweiligen Markiervorrichtung, welche bei einer Ablage der Markiervorrichtung im Markiervorrichtungsmagazin miteinander in Berührung gelangen.

Gemäß einer weiteren bevorzugten Ausführungsform der Erfindung ist es vorgesehen, dass das Ausrichten und das Zentrieren zumindest anteilig gleichzeitig erfolgen. Dadurch können die Durchlaufzeiten der erfindungsgemäßen Markierstation weiter reduziert werden.

Gemäß einer weiteren bevorzugten Ausführungsform der Erfindung ist es vorgesehen, dass in einer Vielzahl von Prüfstationen gleichzeitig Eigenschaften einer Vielzahl von Fahrzeugreifen bestimmt werden. Da ein Prüfvorgang in der Regel zeitaufwändiger ist als ein Markiervorgang, kann die Auslastung einer das erfindungsgemäße Verfahren ausführenden Markierstation erhöht werden, wenn entsprechend eine Vielzahl von Prüfstationen vorgesehen ist, welche gleichzeitig in einer Vielzahl von Prüfvorgängen die jeweils zu untersuchenden Eigenschaften einer Vielzahl von Fahrzeugreifen bestimmen. Diese Vielzahl von Fahrzeugreifen wird dann gleichermaßen der das erfindungsgemäße Verfahren ausführenden Markierstation zugeführt.

Gemäß einer weiteren bevorzugten Ausführungsform der Erfindung ist es vorgesehen, dass im Rahmen der Zuführung auch eine Information über die Eigenschaften des Fahrzeugreifens zugeführt wird. Das Zuführen der Information erfolgt dabei bevorzugt elektronisch über ein hierfür ausgelegtes Datenverarbeitungsprogramm, welches zunächst die Informationen aus dem Prüfvorgang des Fahrzeugreifens erfasst und diese dann an die Markierstation überträgt. Die Informationen erlauben zumindest eine Auswahl einer bestimmten Markiervorrichtung aus der Vielzahl von unterschiedlichen Markiervorrichtungen, eine Bestimmung einer Winkelposition und eine Bestimmung einer Radialposition zur Anbringung der Markierung.

Gemäß einer weiteren bevorzugten Ausführungsform der Erfindung ist es vorgesehen, dass eine Reifenwandung des Fahrzeugreifens zumindest während des Markierens an einer Innenseite des Fahrzeugreifens gestützt wird. Dies vereinfacht das Anbringen der Markierung, da ein Nachgeben bzw. Wegbiegen der Reifenwandung verhindert wird. Das Stützen des Fahrzeugsreifens kann beispielsweise durch einen entsprechend ausgebildeten Stützkörper erfolgen, welcher insbesondere automatisiert in das Innere des Fahrzeugreifens eingebracht wird.

Die Erfindung betrifft, wie in Anspruch 8 definiert, weiterhin eine Markierstation zum Markieren eines Fahrzeugreifens, umfassend einen Roboterarm und eine Vielzahl von unterschiedlichen Markiervorrichtungen, wobei die Markiervorrichtungen in mindestens einem Markiervorrichtungsmagazin bevorratet sind und wobei der Roboterarm dazu ausgebildet ist, den Fahrzeugreifen nach Maßgabe von Eigenschaften des Fahrzeugreifens mittels einer Markiervorrichtung aus der Vielzahl von unterschiedlichen Markiervorrichtungen zu markieren. Die erfindungsgemäße Markierstation zum Markieren eines Fahrzeugreifens zeichnet sich dadurch aus, dass der Roboterarm weiterhin dazu ausgebildet ist, die Markiervorrichtung zum Markieren des Fahrzeugreifens am Fahrzeugreifen zu positionieren. Die erfindungsgemäße Markierstation zum Markieren eines Fahrzeugreifens umfasst somit alle benötigten Mittel zur Ausführung des erfindungsgemäßen Verfahrens und führt damit zu den bereits beschriebenen Vorteilen.

Gemäß einer bevorzugten Ausführungsform der Erfindung ist es vorgesehen, dass die Vielzahl von Markiervorrichtungen zumindest teilweise als Vielzahl von Heißprägevorrichtungen ausgebildet ist. Heißprägevorrichtungen ermöglichen das Anbringen von Prägemarkierungen, die besonders robust und dauerhaft sind.

Gemäß einer weiteren bevorzugten Ausführungsform der Erfindung ist es vorgesehen, dass die Vielzahl Markiervorrichtungen zumindest teilweise über eine elektrische Energiespeichereinheit verfügt. Somit kann eine entsprechende Markiervorrichtung einen im Betrieb benötigten elektrischen Energiebedarf aus der Energiespeichereinheit entnehmen und muss nicht während des Betriebs über den Roboterarm mit elektrischer Energie versorgt werden. Mögliche Energiebedarfe können z.B. eine Heizvorrichtung zum Heizen eines Heißprägestempels sein, eine Betätigung eines Farbstempels, ein Betrieb eines Mikrocontrollers oder sonstiger elektronischer Komponenten der Markiervorrichtung.

Gemäß einer weiteren bevorzugten Ausführungsform der Erfindung ist es vorgesehen, dass das mindestens eine Markiervorrichtungsmagazin sowie die Vielzahl von Markiervorrichtungen dazu ausgebildet sind, die jeweils eine elektrische Energiespeichereinheit über einen Aufladevorgang mit elektrischer Energie aufzuladen, während sich die Vielzahl von Markiereinrichtungen im mindestens eine Markiervorrichtungsmagazin befindet. Das Aufladen mit elektrischer Energie erfolgt bevorzugt über entsprechende elektrische Kontakte des Markiervorrichtungsmagazins und der jeweiligen Markiervorrichtung, welche bei einer Ablage der Markiervorrichtung im Markiervorrichtungsmagazin miteinander in Berührung gelangen.

Gemäß einer besonders bevorzugten Ausführungsform der Erfindung ist es vorgesehen, dass der Aufladevorgang kontaktlos erfolgt, insbesondere induktiv. Somit ist es nicht erforderlich, eine bestimmte Schnittstelle in Form aufeinander abgestimmter elektrischer Kontakte vorzusehen.

Gemäß einer weiteren bevorzugten Ausführungsform der Erfindung ist es vorgesehen, dass die Vielzahl von elektrischen Markiervorrichtungen jeweils über eine thermische Energiespeichereinheit verfügt. Die thermische Energiespeichereinheit kann beispielsweise als metallischer Körper ausgebildet sein, welcher eine vergleichsweise hohe Wärmekapazität aufweist und mit dem Heißprägestempel in Kontakt steht. Somit kann eine Temperatur des Heißprägestempels vergleichsweise lange in einem zum Heißprägen erforderlichen Temperaturbereich gehalten werden, was wiederum die unterbrechungsfreie Einsatzdauer einer derartigen Markiervorrichtung entsprechend verlängert.

Gemäß einer besonders bevorzugten Ausführungsform der Erfindung ist es vorgesehen, dass das mindestens eine Markiervorrichtungsmagazin sowie die Vielzahl von Markiervorrichtungen dazu ausgebildet sind, die jeweils eine thermische Energiespeichereinheit über einen Aufladevorgang mit thermischer Energie aufzuladen, während sich die Vielzahl von Markiervorrichtungen im mindestens eine Markiervorrichtungsmagazin befindet. Dazu kann das mindestens eine Markiervorrichtungsmagazin beispielsweise über eine Wärmequelle verfügen, welch bei einer Ablage der jeweiligen Markiervorrichtung an ihrer individuellen Position in Kontakt mit dem Heißprägestempel gelangt und somit den Heißprägestempel sowie die mit dem Heißprägestempel ebenfalls in Kontakt stehende thermische Energiespeichereinheit mit Wärme versorgt.

Nachfolgend wird die Erfindung anhand von in den Figuren dargestellten Ausführungsformen beispielhaft erläutert.

Es zeigen:
- Fig. 1: beispielhaft und schematisch eine erfindungsgemäße Markierstation zum Markieren eines Fahrzeugreifens und
- Fig. 2: beispielhaft und schematisch eine mögliche Ausführungsform eines erfindungsgemäßen Verfahrens zum Markieren eines Fahrzeugreifens in Form eines Flussdiagramms.

Gleiche Gegenstände, Funktionseinheiten und vergleichbare Komponenten sind figurenübergreifend mit den gleichen Bezugszeichen bezeichnet. Diese Gegenstände,

Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

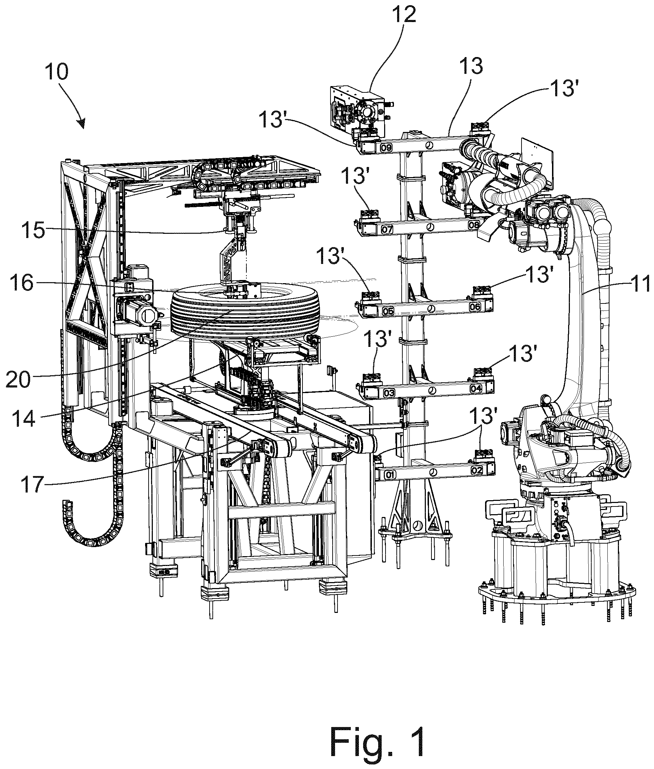

Fig. 1 zeigt beispielhaft und schematisch eine erfindungsgemäße Markierstation 10 zum Markieren eines Fahrzeugreifens 20. Die Markierstation 10 umfasst einen Roboterarm 11 und eine Vielzahl von unterschiedlichen Markiervorrichtungen 12, von denen der Anschaulichkeit wegen nur eine einzelne Markiervorrichtung 12 in Fig. 1 dargestellt ist. Wie zu sehen ist, ist die Markiervorrichtung 12 in einem Markiervorrichtungsmagazin 13 bevorratet, wobei das Markiervorrichtungsmagazin 13 zur Bevorratung einer Vielzahl von Markiervorrichtungen 12 an jeweils einer individuellen Position ausgebildet ist. Das Markiervorrichtungsmagazin 13 verfügt zudem über elektrische Kontakte 13' für jede Markiervorrichtung 12, welche über entsprechend ausgebildete Gegenkontakte (nicht dargestellt in Fig. 1) der Markiervorrichtungen 12 einerseits einen elektrischen Energiespeicher der Markiervorrichtungen 12 laden und außerdem einen Heißprägestempel (ebenfalls nicht dargestellt in Fig. 1) der Markiervorrichtungen 12 über eine in die Markiervorrichtungen 12 baulich integrierte Heizspindel heizen.

Die Markierstation 10 umfasst beispielsgemäß weiterhin einen Drehteller 14 zum Ausrichten des Fahrzeugreifens 20, d.h. zum Einstellen einer vorgesehenen Winkelposition hinsichtlich der Rotationsachse des Fahrzeugreifens 20. Außerdem umfasst die Markierstation 10 einen Zentrierarm 15, der den Fahrzeugreifen 20 auf dem Drehteller 14 verschieben kann, so dass dieser mittig auf dem Drehteller 15 liegt. Nach dem Ausrichten und Zentrieren, was beispielsgemäß gleichzeitig erfolgt, befindet sich der Fahrzeugreifen 20 in der vorgesehenen Position sowie in der vorgesehenen Winkelposition.

Der Roboterarm 11 ist beispielsgemäß mit sechs Bewegungsachsen ausgebildet. Weiterhin ist er dazu ausgebildet, eine jeweils benötigte Markiervorrichtung 12 aus dem Markiervorrichtungsmagazin 13 zu entnehmen, zur Markierung des Fahrzeugreifens 20 zu verwenden und anschließend an diejenige Position im Markiervorrichtungsmagazin 13, von der die Markiervorrichtung 12 zuvor entnommen wurde, zurückzulegen. Das Markieren des Fahrzeugreifens 20 erfolgt also, indem der Roboterarm 11 eine benötigte Markiervorrichtung 12 aus dem Markiervorrichtungsmagazin 13 aufnimmt, zum Fahrzeugreifen 20 führt, am Fahrzeugreifen 20 positioniert und dann den Fahrzeugreifen 20 mittels der Markiervorrichtung 12 markiert. Die Markierung des Fahrzeugreifens 20 erfolgt dabei nach Maßgabe von Eigenschaften des Fahrzeugreifens 20 mittels einer die Eigenschaften darstellenden Markierung bzw. einer entsprechenden Markiervorrichtung 12.

Da sich der Fahrzeugreifen 20 nach dem Ausrichten und Zentrieren in einer zum Anbringen der Markierung vorgesehenen Position und Winkelposition befindet, kann der Roboterarm 11 die Markiervorrichtung 12 zum Fahrzeugreifen 20 bewegen und dort an der dazu vorgesehenen Stelle des Fahrzeugreifens 20 die der Qualität des Fahrzeugreifens 20 entsprechende Markierung anbringen.

Damit der Roboterarm 11 die jeweils benötigte Markiervorrichtung 12 aufnimmt und zum Anbringen der Markierung verwendet, wird der Markierstation 10 elektronisch über ein hierfür ausgelegtes Datenverarbeitungsprogramm im Rahmen der Zuführung des Fahrzeugreifens 20 auch eine Information über die Eigenschaften des Fahrzeugreifens 20 zugeführt. Das Datenverarbeitungsprogramm erfasst dabei zunächst Informationen aus dem Prüfvorgang des Fahrzeugreifens 20 und überträgt diese dann an die Markierstation 20. Die Informationen erlauben dann eine Auswahl einer bestimmten Markiervorrichtung 12 aus der Vielzahl von unterschiedlichen Markiervorrichtungen 12. Nach dem Zuführen des Fahrzeugreifens 20 zur Markierstation 10, beispielsweise über ein Förderband, wird der Fahrzeugreifen 20 von der Markierstation 10 ausgerichtet und zentriert.

Weiterhin umfasst die Markierstation 10 auch einen Stützkörper 16, der während des Markierens durch den Roboterarm 11 bzw. durch die Markiervorrichtung 12 automatisiert in das Innere des Fahrzeugreifens 20 gefahren wird und von dort die Reifenwandung, auf welcher die Markierung angebracht wird, stützt.

Schließlich umfasst die Markierstation 10 auch ein Förderband 17 mittels dessen der Fahrzeugreifen 20 beispielsgemäß von einer oder mehreren Prüfstationen (nicht dargestellt in Fig. 1) der Markierstation 10 zugeführt wird. Die Prüfstationen ermitteln dabei zunächst die Eigenschaften des Fahrzeugreifens 20 und die Markierstation 10 bringt eine die Eigenschaften des Fahrzeugreifens 20 beschreibende Markierung auf dem Fahrzeugreifen 20 an.

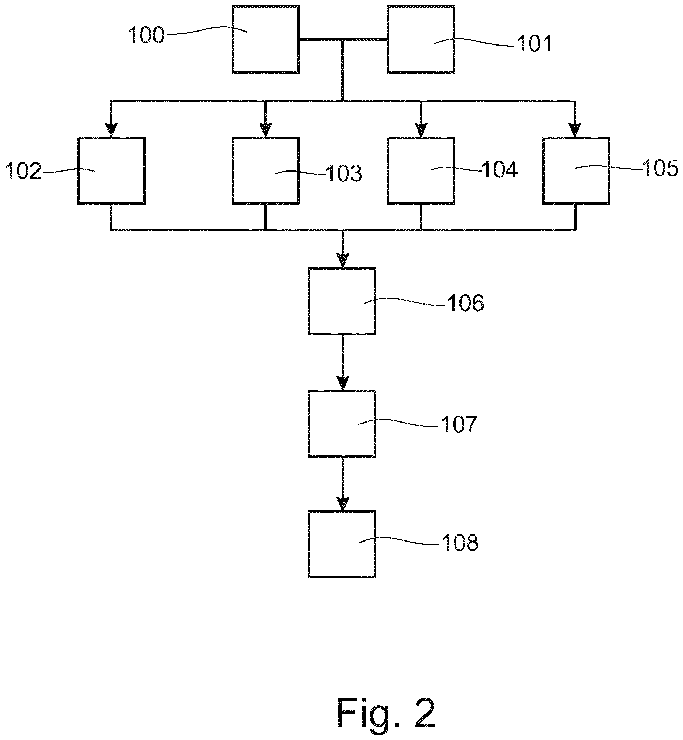

Fig. 2 zeigt beispielhaft und schematisch eine mögliche Ausführungsform eines erfindungsgemäßen Verfahrens zum Markieren eines Fahrzeugreifens 20 in Form eines Flussdiagramms. In einem ersten Verfahrensschritt 100 erfolgt eine Zuführung des Fahrzeugreifens 20 zu einer erfindungsgemäßen Markierstation 10. Gleichzeitig erfolgt in Schritt 101 eine Zuführung von eine Qualitätsstufe des Fahrzeugreifens 20 beschreibenden Informationen an die Markierstation 10. In Schritt 102 erfolgt dann ein Ausrichten des Fahrzeugreifens 20 und in Schritt 103 erfolgt ein Zentrieren des Fahrzeugreifens 20. In Schritt 104 erfolgt ein Einfahren eines Stützkörpers 16 in das Innere des Fahrzeugreifens 20. In Schritt 105 wählt der Roboterarm 11 eine Markiervorrichtung 12 aus dem Markiervorrichtungsmagazin 13 aus. Die Schritte 102, 103, 104 und 105 erfolgen beispielsgemäß gleichzeitig. In Schritt 106 nimmt der Roboterarm 11 die ausgewählte Markiervorrichtung 12 auf, führt sie in Schritt 107 zum Fahrzeugreifen 20 und positioniert sie am Fahrzeugreifen 20. In Schritt 108 schließlich erfolgt das eigentliche Markieren nach Maßgabe der Qualitätsstufe des Fahrzeugreifens 20.

### Bezugszeichen

- 10: Markierstation
- 11: Roboterarm
- 12: Markiervorrichtung
- 13: Markiervorrichtungsmagazin
- 13': elektrische Kontakte
- 14: Drehteller
- 15: Zentrierarm
- 16: Stützkörper
- 17: Förderband
- 20: Fahrzeugreifen
- 100: Zuführung des Fahrzeugreifens
- 101: Zuführung von eine Qualitätsstufe des Fahrzeugreifens beschreibenden Informationen
- 102: Ausrichten des Fahrzeugreifens
- 103: Zentrieren des Fahrzeugreifens
- 104: Einfahren eines Stützkörpers
- 105: Auswählen einer Markiervorrichtung
- 106: Aufnehmen der ausgewählten Markiervorrichtung
- 107: Positionieren der Markiervorrichtung am Fahrzeugreifen
- 108: Markieren des Fahrzeugreifens

## Patentansprüche

1. Verfahren zum Markieren eines Fahrzeugreifens (20),
wobei eine Zuführung des Fahrzeugreifens zu einer Markierstation (10) erfolgt (100), wobei in der Markierstation (10) ein Ausrichten und ein Zentrieren des Fahrzeugreifens (20) erfolgen (102, 103),
wobei in der Markierstation (10) das Markieren nach Maßgabe von Eigenschaften des Fahrzeugreifens (20) erfolgt (108),
wobei das Markieren mittels einer Markiervorrichtung (12) aus einer Vielzahl von unterschiedlichen Markiervorrichtungen (12) erfolgt (108) und
wobei die Markiervorrichtung (12) zum Markieren des Fahrzeugreifens (20) mittels eines Roboterarms (11) am Fahrzeugreifen (20) positioniert wird (107),
**dadurch gekennzeichnet, dass** die Vielzahl von unterschiedlichen Markiervorrichtungen (12) in einem Markiervorrichtungsmagazin (13) bevorratet wird und dass der Roboterarm (11) eine spezifische Markiervorrichtung (12) aus der Vielzahl von unterschiedlichen Markiervorrichtungen (12) auswählt und aufnimmt (105, 106).

2. Verfahren nach Anspruch 1,
**dadurch gekennzeichnet, dass** der Roboterarm (11) bei einem Wechsel der Markiervorrichtung (12) eine nicht mehr benötigte Markiervorrichtung (12) im Markiervorrichtungsmagazin (13) an einer der nicht mehr benötigten Markiervorrichtung (12) zugeordneten Position ablegt.

3. Verfahren nach mindestens einem der Ansprüche 1 und 2,
**dadurch gekennzeichnet, dass** die Markiervorrichtung (12) während ihrer Ablagedauer mit elektrischer und/oder thermischer Energie für eine Vielzahl von Markiervorgängen versorgt wird.

4. Verfahren nach mindestens einem der Ansprüche 1 bis 3,
**dadurch gekennzeichnet, dass** das Ausrichten und das Zentrieren zumindest anteilig gleichzeitig erfolgen (102, 103).

5. Verfahren nach mindestens einem der Ansprüche 1 bis 4,
**dadurch gekennzeichnet, dass** in einer Vielzahl von Prüfstationen gleichzeitig Eigenschaften einer Vielzahl von Fahrzeugreifen (20) bestimmt werden.

6. Verfahren nach mindestens einem der Ansprüche 1 bis 5,
**dadurch gekennzeichnet, dass** im Rahmen der Zuführung auch eine Information über die Eigenschaften des Fahrzeugreifens (20) zugeführt wird (101).

7. Verfahren nach mindestens einem der Ansprüche 1 bis 6,
**dadurch gekennzeichnet, dass** eine Reifenwandung des Fahrzeugreifens (20) zumindest während des Markierens an einer Innenseite des Fahrzeugreifens (20) gestützt wird (104).

8. Markierstation (10) zum Markieren eines Fahrzeugreifens (20),
umfassend einen Roboterarm (11) und eine Vielzahl von unterschiedlichen Markiervorrichtungen (12),
wobei der Roboterarm (11) weiterhin dazu ausgebildet ist, die Markiervorrichtung (12) zum Markieren des Fahrzeugreifens (20) am Fahrzeugreifen (20) zu positionieren
**dadurch gekennzeichnet, dass**
der Roboterarm (11) dazu ausgebildet ist, den Fahrzeugreifen (20) nach Maßgabe von Eigenschaften des Fahrzeugreifens (20) mittels einer Markiervorrichtung (12) aus der Vielzahl von unterschiedlichen Markiervorrichtungen (12) zu markieren und
die Markiervorrichtungen (12) in mindestens einem Markiervorrichtungsmagazin (13) bevorratet sind.

9. Markierstation (10) nach Anspruch 8,
**dadurch gekennzeichnet, dass** die Vielzahl von Markiervorrichtungen (12) zumindest teilweise als Vielzahl von Heißprägevorrichtungen (12) ausgebildet ist.

10. Markierstation (10) nach mindestens einem der Ansprüche 8 und 9,
**dadurch gekennzeichnet, dass** die Vielzahl von Markiervorrichtungen (12) zumindest teilweise über eine elektrische Energiespeichereinheit verfügt.

11. Markierstation (10) nach Anspruch 10,
**dadurch gekennzeichnet, dass** das mindestens eine Markiervorrichtungsmagazin (13) sowie die Vielzahl von Markiervorrichtungen (12) dazu ausgebildet sind, die jeweils eine elektrische Energiespeichereinheit über einen Aufladevorgang mit elektrischer Energie aufzuladen, während sich die Vielzahl von Markiervorrichtungen im mindestens eine Markiervorrichtungsmagazin befindet.

12. Markierstation (10) nach Anspruch 11,
**dadurch gekennzeichnet, dass** der Aufladevorgang kontaktlos erfolgt.

13. Markierstation (10) nach mindestens einem der Ansprüche 8 bis 12,
**dadurch gekennzeichnet, dass** die Vielzahl von elektrischen Markiervorrichtungen (12) jeweils über eine thermische Energiespeichereinheit verfügt.

14. Markierstation (10) nach Anspruch 13,
**dadurch gekennzeichnet, dass** das mindestens eine Markiervorrichtungsmagazin (13) sowie die Vielzahl von Markiervorrichtungen (12) dazu ausgebildet sind, die jeweils eine thermische Energiespeichereinheit über einen Aufladevorgang mit thermischer Energie aufzuladen, während sich die Vielzahl von Markiervorrichtungen (12) im mindestens eine Markiervorrichtungsmagazin (13) befindet.

## Claims

1. Method for marking a vehicle tyre (20), wherein the vehicle tyre is supplied (100) to a marking station (10), wherein the vehicle tyre (20) is aligned and centred (102, 103) in the marking station (10), wherein the marking (108) takes place in the marking station (10) according to properties of the vehicle tyre (20), wherein the marking (108) takes place by means of a marking device (12) from a plurality of different marking devices (12), and wherein the marking device (12) for marking the vehicle tyre (20) is positioned (107) on the vehicle tyre (20) by means of a robot arm (11), **characterized in that** the plurality of different marking devices (12) are stored in a marking device magazine (13) and **in that** the robot arm (11) selects and picks up (105, 106) a specific marking device (12) from the plurality of different marking devices (12).

2. Method according to Claim 1, **characterized in that**, when changing the marking device (12), the robot arm (11) deposits a no longer required marking device (12) in the marking device magazine (13) at a position assigned to the no longer required marking device (12).

3. Method according to at least one of Claims 1 and 2, **characterized in that** the marking device (12) is supplied with electrical and/or thermal energy for a plurality of marking procedures during the time that it is being deposited.

4. Method according to at least one of Claims 1 to 3, **characterized in that** the aligning and the centring (102, 103) take place at least partly simultaneously.

5. Method according to at least one of Claims 1 to 4, **characterized in that** properties of a plurality of vehicle tyres (20) are determined simultaneously in a plurality of testing stations.

6. Method according to at least one of Claims 1 to 5, **characterized in that** information about the properties of the vehicle tyre (20) is also supplied as part of the supplying (101).

7. Method according to at least one of Claims 1 to 6, **characterized in that** a tyre wall of the vehicle tyre (20) is supported (104) on an inner side of the vehicle tyre (20) at least during the marking.

8. Marking station (10) for marking a vehicle tyre (20), comprising a robot arm (11) and a plurality of different marking devices (12), wherein the robot arm (11) is furthermore designed to position the marking device (12) for marking the vehicle tyre (20) on the vehicle tyre (20), **characterized in that** the robot arm (11) is designed to mark the vehicle tyre (20) according to properties of the vehicle tyre (20) by means of a marking device (12) from the plurality of different marking devices (12) and the marking devices (12) are stored in at least one marking device magazine (13).

9. Marking station (10) according to Claim 8, **characterized in that** the plurality of marking devices (12) at least in part take the form of a plurality of heat embossing devices (12).

10. Marking station (10) according to at least one of Claims 8 and 9, **characterized in that** the plurality of marking devices (12) at least in part feature an electrical energy storage unit.

11. Marking station (10) according to Claim 10, **characterized in that** the at least one marking device magazine (13) and the plurality of marking devices (12) are designed to charge the respective electrical energy storage unit with electrical energy via a charging procedure whilst the plurality of marking devices are situated in the at least one marking device magazine.

12. Marking station (10) according to Claim 11, **characterized in that** the charging procedure takes place contactlessly.

13. Marking station (10) according to at least one of Claims 8 to 12, **characterized in that** the plurality of electrical marking devices (12) each feature a thermal energy storage unit.

14. Marking station (10) according to Claim 13, **characterized in that** the at least one marking device magazine (13) and the plurality of marking devices (12) are designed to charge the respective thermal energy storage unit with thermal energy via a charging procedure, whilst the plurality of marking devices (12) are situated in at least one marking device magazine (13) .

## Revendications

1. Procédé de marquage d'un pneu de véhicule (20), une amenée du pneu du véhicule vers un poste de marquage (10) étant effectuée (100),
un alignement et un centrage du pneu de véhicule (20) étant effectués (102, 103) dans le poste de marquage (10),
le marquage étant effectué (108) dans le poste de marquage (10) en fonction des caractéristiques du pneu de véhicule (20),
le marquage étant effectué (108) au moyen d'un dispositif de marquage (12) parmi une pluralité de dispositifs de marquage (12) différents, et
le dispositif de marquage (12) étant positionné (107) sur le pneu de véhicule (20) au moyen d'un bras de robot (11) pour marquer le pneu de véhicule (20),
**caractérisé en ce que** la pluralité de dispositifs de marquage différents (12) est stockée dans un magasin de dispositifs de marquage (13) et **en ce que** le bras de robot (11) sélectionne et prélève (105, 106) un dispositif de marquage spécifique (12) parmi la pluralité de dispositifs de marquage différents (12).

2. Procédé selon la revendication 1,
**caractérisé en ce que**, lors d'un changement de dispositif de marquage (12), le bras de robot (11) dépose un dispositif de marquage (12) qui n'est plus nécessaire dans le magasin de dispositifs de marquage (13) à une position associée au dispositif de marquage (12) qui n'est plus nécessaire.

3. Procédé selon au moins l'une quelconque des revendications 1 et 2,
**caractérisé en ce que** le dispositif de marquage (12) est alimenté en énergie électrique et/ou thermique pour une pluralité d'opérations de marquage pendant sa durée de dépôt.

4. Procédé selon au moins l'une quelconque des revendications 1 à 3,
**caractérisé en ce que** l'alignement et le centrage sont effectués au moins partiellement simultanément (102, 103).

5. Procédé selon au moins l'une quelconque des revendications 1 à 4,
**caractérisé en ce que** les caractéristiques d'une pluralité de pneus de véhicule (20) sont déterminées simultanément dans une pluralité de postes d'essai.

6. Procédé selon au moins l'une quelconque des revendications 1 à 5,
**caractérisé en ce que**, dans le cadre de l'amenée, une information concernant les caractéristiques du pneu de véhicule (20) est également amenée (101).

7. Procédé selon au moins l'une quelconque des revendications 1 à 6,
**caractérisé en ce qu'**un flanc de pneu du pneu de véhicule (20) est supporté (104) au moins pendant le marquage sur un côté intérieur du pneu de véhicule (20).

8. Poste de marquage (10) pour marquer un pneu de véhicule (20),
comprenant un bras de robot (11) et une pluralité de dispositifs de marquage différents (12),
le bras de robot (11) étant en outre réalisé pour positionner le dispositif de marquage (12) sur le pneu de véhicule (20) pour marquer le pneu de véhicule (20), **caractérisé en ce que**
le bras de robot (11) est réalisé pour marquer le pneu de véhicule (20) en fonction des caractéristiques du pneu de véhicule (20) au moyen d'un dispositif de marquage (12) parmi la pluralité de dispositifs de marquage différents (12)
et
les dispositifs de marquage (12) sont stockés dans au moins un magasin de dispositifs de marquage (13).

9. Poste de marquage (10) selon la revendication 8, **caractérisé en ce que** la pluralité de dispositifs de marquage (12) est au moins partiellement réalisée sous forme de pluralité de dispositifs d'estampage à chaud (12).

10. Poste de marquage (10) selon au moins l'une quelconque des revendications 8 et 9,
**caractérisé en ce que** la pluralité de dispositifs de marquage (12) dispose au moins partiellement d'une unité de stockage d'énergie électrique.

11. Poste de marquage (10) selon la revendication 10, **caractérisé en ce que** l'au moins un magasin de dispositifs de marquage (13) et la pluralité de dispositifs de marquage (12) sont réalisés pour charger l'unité de stockage d'énergie électrique respective avec de l'énergie électrique par le biais d'une opération de charge tandis que la pluralité de dispositifs de marquage se trouve dans l'au moins un magasin de dispositifs de marquage.

12. Poste de marquage (10) selon la revendication 11, **caractérisé en ce que** l'opération de charge est effectuée sans contact.

13. Poste de marquage (10) selon au moins l'une quelconque des revendications 8 à 12,
**caractérisé en ce que** la pluralité de dispositifs de marquage électriques (12) disposent chacun une unité de stockage d'énergie thermique.

14. Poste de marquage (10) selon la revendication 13, **caractérisé en ce que** l'au moins un magasin de dispositifs de marquage (13) et la pluralité de dispositifs de marquage (12) sont réalisés pour charger l'unité de stockage d'énergie thermique respective avec de l'énergie thermique par le biais d'une opération de charge tandis que la pluralité de dispositifs de marquage (12) se trouve dans l'au moins un magasin de dispositifs de marquage (13).
